# EUROPEAN PATENT SPECIFICATION

(11) **EP 2 966 932 B1**
(45) Date of publication and mention of the grant of the patent: **19.07.2017**
(21) Application number: 14882774.4
(22) Date of filing: 31.03.2014
(51) Int. Cl.: H04W 48/20

(54) **WIRELESS FIDELITY WI-FI ACCESS METHOD FOR USER EQUIPMENT AND WI-FI ACCESS NODE**
WIFI-ZUGANGSVERFAHREN FÜR EINE BENUTZERVORRICHTUNG UND WIFI-ZUGANGSKNOTEN
PROCÉDÉ D'ACCÈS WI-FI (FIDÉLITÉ SANS FIL) POUR UN ÉQUIPEMENT D'UTILISATEUR, ET NOEUD D'ACCÈS WI-FI

(43) Date of publication of application: 13.01.2016
(73) Proprietor: Huawei Device Co., Ltd., Shenzhen, Guangdong 518129 (CN)
(72) Inventor: XIANG, Chao, Shenzhen Guangdong 518129 (CN)
(74) Representative: Isarpatent
(86) International application number: PCT/CN2014/074427
(87) International publication number: WO 2015/149232

(56) References cited:
- WO-A1-2012/105634
- WO-A2-2008/140325
- CN-A- 103 686 890
- US-A1- 2011 130 149

## Description

### TECHNICAL FIELD

Embodiments of the present invention relate to communications technologies, and in particular, to a method for accessing wireless fidelity Wi-Fi by a user equipment, and a Wi-Fi access point.

### BACKGROUND

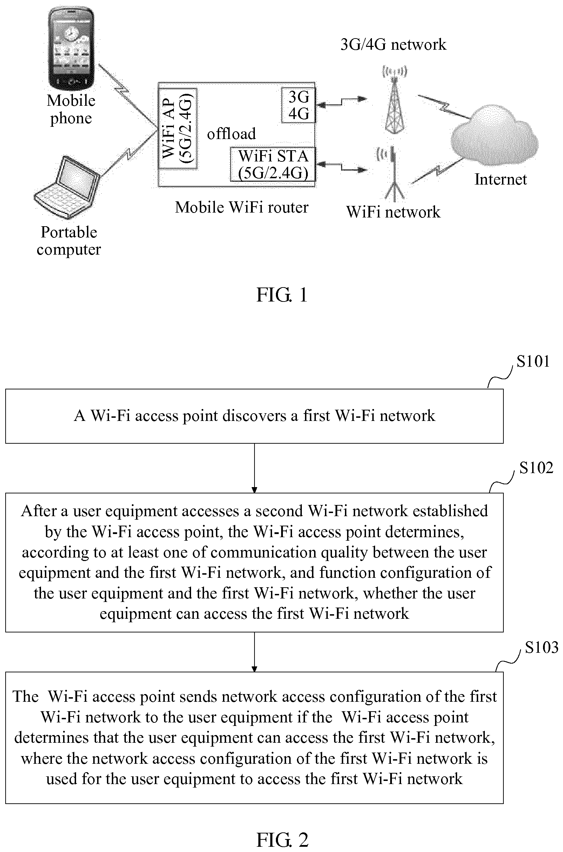

With continuous development of a wireless fidelity (Wi-Fi) technology, a new type of wireless router -- a mobile wireless fidelity (mobile Wi-Fi for) router becomes popular in market due to a built-in battery, a small size, and high portability. FIG. 1 is a system principle diagram of an existing mobile Wi-Fi router. As shown in FIG. 1, in a downlink direction, the mobile Wi-Fi router may be used as a Wi-Fi access point to establish a Wi-Fi network, so that another device can access the Wi-Fi network; a USB interface, a Bluetooth interface, or the like may be disposed in the Wi-Fi access point, so that another device can access the Wi-Fi access point. In an uplink direction, the mobile Wi-Fi router may use a subscriber identity module card to access a 3G/4G network, so as to access the Internet. The mobile Wi-Fi router may further access another Wi-Fi network in an environment in which the mobile Wi-Fi router is located, and access the Internet by using the another Wi-Fi network.

To access the Internet by using the 3G/4G network, a user generally needs to pay a fee according to consumed traffic, but the Wi-Fi network is generally free or requires a relatively low fee. Therefore, based on the foregoing consideration, when accessing the Internet by using the mobile Wi-Fi router by using another user equipment, the user hopes to access the Internet in the uplink direction preferably by using the another Wi-Fi network in the environment in which the mobile Wi-Fi router is located.

A current practice is that when detecting that there is another available Wi-Fi network, a mobile Wi-Fi router preferably accesses the another Wi-Fi network, and another user equipment has accessed the mobile Wi-Fi router and accesses the Internet by using the mobile Wi-Fi router. However, in this practice, a Wi-Fi capability of a user equipment itself is not fully used, and there are multiple Wi-Fi network links that easily cause signal interference and unnecessarily consume electric energy of the mobile Wi-Fi router.
WO 2008/140325 A2 discloses a method for initiating a handover of a wireless terminal from a first access point in a first wireless network to a second access point in a second wireless network. In the method, a handover instruction, which includes information that identifies the second access point, is transmitted from the first access point to the terminal. A request to establish communication over the second access point is received at the second access point. The terminal is associated with the second wireless network and provides communication with the terminal over the second access point.

### SUMMARY

The present invention provides a method for accessing wireless fidelity Wi-Fi by a user equipment, and a Wi-Fi access point, so as to implement that the user equipment directly connects to an expected Wi-Fi network without using the wireless fidelity Wi-Fi access point.

According to a first aspect, the present invention provides a method for accessing wireless fidelity Wi-Fi by a user equipment according to independent claim 1. According to a second aspect, the present invention provides a Wi-Fi access point according to the independent claim 3.

Preferred embodiments are provided by the dependent claims.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a system principle diagram of an existing Mobile Wi-Fi router;
FIG. 2 is a schematic flowchart of a method for accessing wireless fidelity Wi-Fi by a user equipment according to Embodiment 1 of the present invention;
FIG. 3 is a schematic flowchart of a method for accessing wireless fidelity Wi-Fi by a user equipment according to Embodiment 2 of the present invention;
FIG. 4 is a schematic structural diagram of a Wi-Fi access point according to Embodiment 3 of the present invention;
FIG. 5 is a schematic structural diagram of a Wi-Fi access point according to Embodiment 4 of the present invention;
FIG. 6 is a schematic structural diagram of a Wi-Fi access point according to Embodiment 5 of the present invention; and
FIG. 7 is a schematic structural diagram of a Wi-Fi access point according to Embodiment 6 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

FIG. 2 is a schematic flowchart of a method for accessing wireless fidelity Wi-Fi by a user equipment according to Embodiment 1 of the present invention. As shown in FIG. 2, the method for accessing wireless fidelity Wi-Fi by a user equipment provided in this embodiment includes:
S101. A Wi-Fi access point discovers a first Wi-Fi network.

The Wi-Fi access point may be a mobile wireless router, such as a mobile Wi-Fi router or a 3G/4G WAN card. The first Wi-Fi network may be a Wi-Fi network provided by an operator, a Wi-Fi network provided by another Wi-Fi access point, or the like. When the Wi-Fi access point moves to a Wi-Fi network range, or when a new Wi-Fi network of the operator is enabled in an environment in which the Wi-Fi access point is located, the Wi-Fi access point, such as a mobile Wi-Fi router, may access the Wi-Fi network of the operator according to preset network access configuration in the mobile Wi-Fi router.

Specifically, the discovering a first Wi-Fi network by a Wi-Fi access point includes: accessing, by the Wi-Fi access point, the first Wi-Fi network by using pre-stored network access configuration of the first Wi-Fi network.

S102. After the user equipment accesses a second Wi-Fi network established by the Wi-Fi access point, the Wi-Fi access point determines, according to at least one of communication quality between the user equipment and the first Wi-Fi network, and function configuration of the user equipment and the first Wi-Fi network, whether the user equipment can access the first Wi-Fi network.

The user equipment may be a device that has a Wi-Fi client function, such as a smartphone or a portable computer that has a Wi-Fi function. The user equipment may connect to the Wi-Fi access point by using its Wi-Fi function, and may also connect to the Wi-Fi access point by using a manner such as USB or Bluetooth; the Wi-Fi access point accesses a 2G/3G/4G network of an operator, a Wi-Fi network of an operator, or a Wi-Fi network provided by another Wi-Fi access point. In this way, the user equipment may access the 2G/3G/4G network or the Wi-Fi network of the operator by using the Wi-Fi access point, where a Wi-Fi network may operate on the 2.4 GHz or 5 GHz frequency band.

Generally, the user equipment and the Wi-Fi access point may move together, or a new Wi-Fi network of the operator is enabled in an environment in which the user equipment is located. When the user equipment and the Wi-Fi access point move simultaneously and enter the first Wi-Fi network, or when a new first Wi-Fi network is enabled, after accessing the first Wi-Fi network, the Wi-Fi access point separately evaluates communication quality between the Wi-Fi access point and the user equipment and communication quality between the Wi-Fi access point and the first Wi-Fi network, so as to obtain communication quality between the user equipment and the first Wi-Fi network; and then determines, according to at least one of the communication quality between the user equipment and the operator network, and function configuration of the user equipment and the operator network, whether the user equipment can directly access the first Wi-Fi network.

The first Wi-Fi network may be a Wi-Fi network provided by the operator, a Wi-Fi network provided by another Wi-Fi hotspot, or the like. The function configuration includes respective operating frequency bands, operating modes, or the like of the user equipment and the first Wi-Fi network.

The communication quality between the user equipment and the first Wi-Fi network may be evaluated by using a parameter that includes at least one of the following: a received signal strength indicator (RSSI), a signal-to-noise ratio (SNR), a signal to interference plus noise ratio (Signal to Interference plus Noise Ratio, SINR for short), a packet error rate (Packet Error Rate, PER for short), and the like.

Specifically, there are two ways for the Wi-Fi access point to separately evaluate the communication quality between the Wi-Fi access point and the user equipment and the communication quality between the Wi-Fi access point and the first Wi-Fi network, so as to obtain the communication quality between the user equipment and the first Wi-Fi network: detecting communication quality between the user equipment and the first Wi-Fi network, and determining, according to the communication quality between the first Wi-Fi network and the Wi-Fi access point, whether the user equipment can access the first Wi-Fi network; or according to communication quality between the user equipment and the Wi-Fi access point and according to communication quality between the first Wi-Fi network and the Wi-Fi access point, determining the communication quality between the first Wi-Fi network and the Wi-Fi access point, and determining whether the user equipment can access the first Wi-Fi network. Specifically, when the user equipment and the Wi-Fi access point are relatively close to each other, and signal quality of their connection is relatively favorable, only a communication quality between the first Wi-Fi network and the Wi-Fi access point may be detected. That is, if one or more parameters among the RSSI, a Data Rate, the PER, the SNR, and the SINR meet a preset condition, it is considered that the communication quality between the the first Wi-Fi network and the Wi-Fi access point meets a requirement. Because the user equipment UE and the Wi-Fi access point generally communicate with each other at a relatively short distance, it may further be considered that the communication quality between the UE and the first Wi-Fi network meets the requirement.

In addition, a communication quality between the user equipment UE and the Wi-Fi access point and a communication quality between the Wi-Fi access point and the first Wi-Fi network may also be separately detected, so as to evaluate the communication quality between the UE and the first Wi-Fi network. When all the foregoing communication quality meets the preset condition, it is considered that the communication quality between the UE and the first Wi-Fi network meets the requirement. The method is more comprehensive and reliable in determining communication quality, and therefore can determine the communication quality between the user equipment and the first Wi-Fi network , and determine whether the user equipment can access the first Wi-Fi network can be correctly determined.

Optionally, when whether the user equipment can access the first Wi-Fi network is determined, whether the function configuration of the user equipment and the first Wi-Fi network meets a requirement may be first determined. If the requirement is not met, the communication quality between the user equipment and the first Wi-Fi network does not need to be detected or determined. If the requirement is met, the communication quality between the user equipment and the first Wi-Fi network is further detected and determined.

Optionally, when whether the user equipment can access the first Wi-Fi network is determined, whether the communication quality between the user equipment and the first Wi-Fi network meets a requirement may be first determined. If the requirement is not met, whether the function configuration of the user equipment and the first Wi-Fi network meets the requirement does not need to be determined. If the requirement is met, the function configuration of the user equipment and the first Wi-Fi network is further detected and determined.

Optionally, when whether the user equipment can access the first Wi-Fi network is determined, whether the function configuration of the user equipment and the first Wi-Fi network and the communication quality between the user equipment and the first Wi-Fi network meet a requirement may be determined both. When the two both meet the preset condition, it is considered that the user equipment can access the first Wi-Fi network.

S103. The Wi-Fi access point sends network access configuration of the first Wi-Fi network to the user equipment if the Wi-Fi access point determines that the user equipment can access the first Wi-Fi network, where the network access configuration of the first Wi-Fi network is used for the user equipment to access the first Wi-Fi network.

Specifically, after the Wi-Fi access point determines that the user equipment can access the first Wi-Fi network of the operator, the Wi-Fi access point sends the network access configuration of the first Wi-Fi network to the user equipment, such as a profile file including a service set identifier (Service Set Identifier, SSID for short), an encryption mode, or a password of the first Wi-Fi network, so that the user equipment can directly access the first Wi-Fi network according to the network access configuration. Before the Wi-Fi access point sends the network access configuration of the first Wi-Fi network, the network access configuration may first be encrypted by using a preset key, and then sent to the user equipment, so that the network access configuration of the first Wi-Fi network is not disclosed. The user equipment receives, by using a connection to the Wi-Fi access point, the network access configuration of the first Wi-Fi network that is sent by the Wi-Fi access point, such as a profile file including a service set identifier SSID, an encryption mode, or a password of the first Wi-Fi network. If the network access configuration is encrypted by the mobile Wi-Fi router, the user equipment decrypts the network access configuration by using a key obtained in advance, thereby securely obtaining the network access configuration of the first Wi-Fi network. Then, authentication information, such as the encryption modeor the password, is sent to the first Wi-Fi network according to the service set identifier SSID, in the network access configuration of the first Wi-Fi network. After the first Wi-Fi network verifies that the authentication information is correct, the user equipment accesses the first Wi-Fi network.

Specifically, after the Wi-Fi access point sends the network access configuration of the first Wi-Fi network to the user equipment, the method further includes: querying, by the Wi-Fi access point, whether the user equipment has accessed the first Wi-Fi network; or receiving, by the Wi-Fi access point, an event that is reported by the user equipment and indicates that the user equipment has accessed the first Wi-Fi network. The following separately describes in detail the two cases. The querying, by the Wi-Fi access point, whether the user equipment has accessed the first Wi-Fi network may be determined by performing a ping operation. If the user equipment has accessed the first Wi-Fi network, and because an uplink network side of the Wi-Fi access point and the user equipment are located in a same network segment in this case, that is, a response message of the ping operation can be successfully received, the Wi-Fi access point can query that the user equipment has accessed the first Wi-Fi network; or the Wi-Fi access point receives the event that is reported by the user equipment and indicates that the user equipment has accessed the first Wi-Fi network, that is, the user equipment actively sends a message to the Wi-Fi access point, so as to report that the user equipment has accessed the first Wi-Fi network.

Optionally, if the user equipment has accessed the first Wi-Fi network, after the querying, by the Wi-Fi access point, whether the user equipment has accessed the first Wi-Fi network; or receiving, by the Wi-Fi access point, an event that is reported by the user equipment and indicates that the user equipment has accessed the first Wi-Fi network, the Wi-Fi access point may perform at least one of the following operations: disconnecting a connection to the user equipment, where the connection is based on the second Wi-Fi network; disconnecting a connection to the first Wi-Fi network; and entering a sleep mode. For example, when the Wi-Fi access point is disconnected and has no connection to another user equipment, the Wi-Fi access point enters the sleep mode, so as to reduce energy consumption of the Wi-Fi access point itself.

After the user equipment directly accesses the first Wi-Fi network according to the network access configuration information, and if a connection between the user equipment and the first Wi-Fi network is disconnected due to a movement of the user equipment or the like, in this case, the user equipment may access the Wi-Fi access point again. In this case, the Wi-Fi access point is waken up, and accesses the Wi-Fi network of the operator according to the preset network access configuration.

In this embodiment, a Wi-Fi access point discovers a first Wi-Fi network; after a user equipment accesses the Wi-Fi access point, the Wi-Fi access point determines, according to at least one of communication quality between the user equipment and a network of the first Wi-Fi network and function configuration of the user equipment and the operator network, whether the user equipment can access the first Wi-Fi network; and the Wi-Fi access point sends network access configuration of the first Wi-Fi network to the user equipment if the Wi-Fi access point determines that the user equipment can access the first Wi-Fi network. In this way, this implements that when meeting a condition, the user equipment can directly access the first Wi-Fi network without using the Wi-Fi access point, thereby reducing a performance loss (such as a loss caused by signal interference) caused by a concatenation of multiple networks, reducing power consumption of the Wi-Fi access point, and saving bandwidth of the Wi-Fi access point.

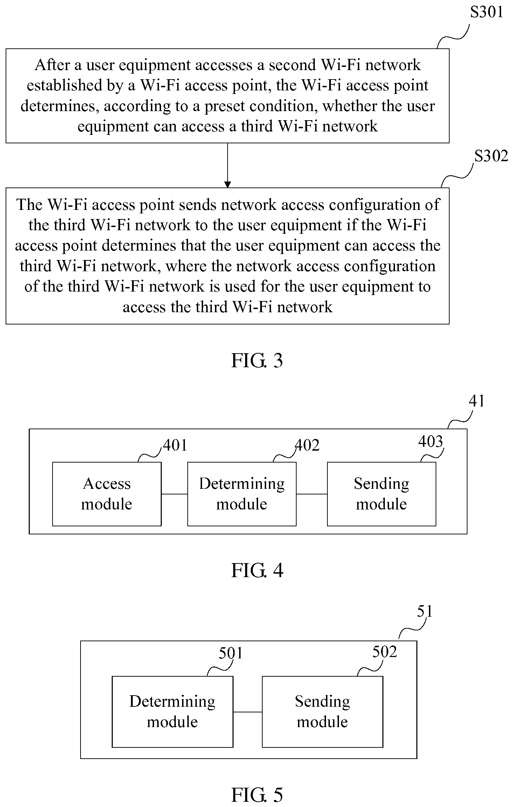

FIG. 3 is a schematic flowchart of a method for accessing wireless fidelity Wi-Fi by a user equipment according to Embodiment 2 of the present invention. This embodiment is corresponding to an implementation scenario in which a wireless fidelity Wi-Fi access point establishes a second Wi-Fi network and a third Wi-Fi network. As shown in FIG. 3, the method for accessing wireless fidelity Wi-Fi by a user equipment provided in this embodiment includes:

S301. After the user equipment accesses the second Wi-Fi network established by the Wi-Fi access point, the Wi-Fi access point determines, according to a preset condition, whether the user equipment can access the third Wi-Fi network.

The user equipment may be a device that has a Wi-Fi client function, such as a smartphone or a portable computer that has a Wi-Fi function. The Wi-Fi access point may be a mobile wireless router, such as a mobile Wi-Fi router. The user equipment may connect to the Wi-Fi access point by using its Wi-Fi function, and then access the second Wi-Fi network established by the Wi-Fi access point.

Specifically, the determining, by the Wi-Fi access point according to a preset condition, whether the user equipment can access the third Wi-Fi network includes:
determining, by the Wi-Fi access point according to at least one of a load condition of a connection between the user equipment and the Wi-Fi access point, communication quality between the user equipment and the third Wi-Fi network, and function configuration of the user equipment and the third Wi-Fi network, whether the user equipment can access the third Wi-Fi network.

The Wi-Fi access point may establish more than one Wi-Fi network. These Wi-Fi networks have different function configuration and network access configuration, which are used for access of multiple different user equipments, or are used to group user equipments that access these Wi-Fi networks. When the Wi-Fi access point has multiple accessible Wi-Fi networks, and if communication load of a Wi-Fi network that the user equipment currently accesses is relatively heavy, the user equipment may be transferred from the Wi-Fi network that the user equipment currently accesses to another accessible Wi-Fi network of the Wi-Fi access point, so as to balance load of the multiple accessible Wi-Fi networks. Specifically, the Wi-Fi access point has multiple accessible Wi-Fi networks, such as AP 1 and AP 2. Different Wi-Fi networks have different user service set identifiers SSID. If a Wi-Fi network, of the Wi-Fi access point, that the user equipment currently accesses is AP 1, when excessive user equipments access AP 1 or communication traffic is relatively large at AP 1, the Wi-Fi access point determines that communication load of the accessed Wi-Fi network is relatively heavy, and may select one second Wi-Fi network AP 2 as an access point of the user equipment according to communication quality and function configuration of another accessible Wi-Fi network.

The communication quality includes at least one of the following: a received signal strength indicator RSSI, a signal-to-noise ratio SNR, a signal to interference plus noise ratio SINR, a packet error rate PER, and the like.

The function configuration includes at least one of the following: a frequency band supported by the user equipment and the third Wi-Fi network, and an operating mode of the user equipment and the third Wi-Fi network.

The network access configuration includes at least one of a service set identifier SSID, an encryption mode, or a password of the third Wi-Fi network.

Specifically, the load condition of the connection between the user equipment and the Wi-Fi access point includes a quantity of user equipments that access a Wi-Fi network established by the Wi-Fi access point, a network traffic condition of the Wi-Fi network established by the Wi-Fi access point, and the like. If there are multiple Wi-Fi networks established by the Wi-Fi access point, the load condition is respective quantities of user equipments that access the multiple Wi-Fi networks and respective network traffic conditions of the multiple Wi-Fi networks.

Optionally, when whether the user equipment can access the third Wi-Fi network is determined, whether the load condition of the connection between the user equipment and the Wi-Fi access point meet a requirement may be first determined. If the requirement is not met, whether the function configuration of the user equipment and the third Wi-Fi network and the communication quality between the user equipment and the third Wi-Fi network meet the requirement does not need to be determined. If the requirement is met, the function configuration of the user equipment and the third Wi-Fi network and the communication quality between the user equipment and the third Wi-Fi network are further detected and determined.

Optionally, when whether the user equipment can access the third Wi-Fi network is determined, whether the function configuration of the user equipment and the third Wi-Fi network meets a requirement may be first determined. If the requirement is not met, the load condition of the connection between the user equipment and the Wi-Fi access point and the communication quality between the user equipment and the third Wi-Fi network do not need to be detected or determined. If the requirement is met, the load condition of the connection between the user equipment and the Wi-Fi access point and the communication quality between the user equipment and the third Wi-Fi network are further detected and determined.

Optionally, when whether the user equipment can access the third Wi-Fi network is determined, whether the communication quality between the user equipment and the third Wi-Fi network meets a requirement may be first determined. If the requirement is not met, whether the load condition of the connection between the user equipment and the Wi-Fi access point and the function configuration of the user equipment and the third Wi-Fi network meet the requirement do not need to be determined. If the requirement is met, the load condition of the connection between the user equipment and the Wi-Fi access point and the function configuration of the user equipment and the third Wi-Fi network are further detected and determined.

Optionally, when whether the user equipment can access the third Wi-Fi network is determined, whether any two or all three of the load condition of the connection between the user equipment and the Wi-Fi access point, the function configuration of the user equipment and the third Wi-Fi network, and the communication quality between the user equipment and the third Wi-Fi network meet a requirement may be determined. If any two or all three simultaneously meet the preset condition, it may be considered that the user equipment can access the third Wi-Fi network.

S302. The Wi-Fi access point sends network access configuration of the third Wi-Fi network to the user equipment if the Wi-Fi access point determines that the user equipment can access the third Wi-Fi network, where the network access configuration of the third Wi-Fi network is used for the user equipment to access the third Wi-Fi network.

Specifically, if the Wi-Fi access point determines that the user equipment can access the third Wi-Fi network, the Wi-Fi access point sends the network access configuration of the third Wi-Fi network to the user equipment. The user equipment then sends authentication information, such as a password, to the third Wi-Fi network according to a service set identifier SSID and an encryption mode in the network access configuration of the third Wi-Fi network; and after it is verified that the authentication information is correct, accesses the third Wi-Fi network.

In this embodiment, a Wi-Fi access point establishes a second Wi-Fi network and a third Wi-Fi network; after a user equipment accesses the second Wi-Fi network established by the Wi-Fi access point, the Wi-Fi access point determines, according to a preset condition, whether the user equipment can access the third Wi-Fi network; and the Wi-Fi access point sends network access configuration of the third Wi-Fi network to the user equipment if the Wi-Fi access point determines that the user equipment can access the third Wi-Fi network, where the network access configuration of the third Wi-Fi network is used for the user equipment to access the third Wi-Fi network. In this way, this implements that the user equipment hands over from a network that originally connects to the Wi-Fi access point to another Wi-Fi network, so as to connect to the Wi-Fi access point.

FIG. 4 is a schematic structural diagram of a Wi-Fi access point according to Embodiment 3 of the present invention. As shown in FIG. 4, a Wi-Fi access point 41 provided in this embodiment includes:
an access module 401, configured to discover a first Wi-Fi network;
a determining module 402, configured to: after a user equipment accesses a third Wi-Fi network established by the Wi-Fi access point 41, determine, according to at least one of communication quality between the user equipment and the first Wi-Fi network, and function configuration of the user equipment and the first Wi-Fi network, whether the user equipment can access the first Wi-Fi network; and
a sending module 403, configured to send network access configuration of the first Wi-Fi network to the user equipment if the determining module 402 determines that the user equipment can access the first Wi-Fi network, where the network access configuration of the first Wi-Fi network is used for the user equipment to access the first Wi-Fi network.

Specifically, the access module 401 may be configured to:
access the first Wi-Fi network by using pre-stored network access configuration of the first Wi-Fi network.

Specifically, the first Wi-Fi network is a Wi-Fi network provided by an operator or a Wi-Fi network provided by another Wi-Fi access point.

Specifically, the determining module 402 may further be configured to: after the sending module 403 sends the network access configuration of the first Wi-Fi network to the user equipment, query whether the user equipment has accessed the first Wi-Fi network; or receive an event that is reported by the user equipment and indicates that the user equipment has accessed the first Wi-Fi network.

The sending module 403 is configured to perform at least one of the following operations: disconnecting a connection to the user equipment, where the connection is based on the second Wi-Fi network; disconnecting a connection to the first Wi-Fi network; and entering a sleep mode.

Specifically, the determining module 402 may be configured to:
detect communication quality between the first Wi-Fi network and the Wi-Fi access point, and determine, according to the communication quality between the first Wi-Fi network and the Wi-Fi access point 41, whether the user equipment can access the first Wi-Fi network; or
according to communication quality between the user equipment and the Wi-Fi access point 41 and according to communication quality between the first Wi-Fi network and the Wi-Fi access point 41, determine the communication quality between the user equipment and the first Wi-Fi network , and determine whether the user equipment can access the first Wi-Fi network.

Specifically, the communication quality includes at least one of the following: a received signal strength indicator RSSI, a signal-to-noise ratio SNR, a signal to interference plus noise ratio SINR, and a packet error rate PER.

Specifically, the function configuration includes at least one of the following: a frequency band supported by the user equipment and the first Wi-Fi network, and an operating mode of the user equipment and the first Wi-Fi network.

Specifically, the network access configuration includes at least one of a service set identifier SSID, an encryption mode, or a password of the first Wi-Fi network.

For a specific process in which the Wi-Fi access point provided in this embodiment performs a method for accessing a wireless fidelity Wi-Fi network by a user equipment, refer to related descriptions in the method embodiment shown in FIG. 2, and details are not described herein again.

In this embodiment, an access module is configured to discover a first Wi-Fi network; a determining module is configured to: after a user equipment accesses a Wi-Fi access point, determine, according to at least one of communication quality between the user equipment and the first Wi-Fi network and function configuration of the user equipment and the first Wi-Fi network, whether the user equipment can access the first Wi-Fi network; and a sending module is configured to: send network access configuration of the first Wi-Fi network to the user equipment if the determining module determines that the user equipment can access the first Wi-Fi network, so that the user equipment directly accesses the first Wi-Fi network according to the network access configuration. In this way, this implements that when meeting a condition, the user equipment can directly access the first Wi-Fi network without using the Wi-Fi access point, thereby reducing a performance loss (such as a loss caused by signal interference) caused by a concatenation of multiple networks, reducing power consumption of the Wi-Fi access point, and saving bandwidth of the Wi-Fi access point.

FIG. 5 is a schematic structural diagram of a Wi-Fi access point according to Embodiment 4 of the present invention. As shown in FIG. 5, a Wi-Fi access point 51 provided in this embodiment establishes a second Wi-Fi network and a third Wi-Fi network, and the Wi-Fi access point 51 includes:
a determining module 501, configured to: after a user equipment accesses the second Wi-Fi network established by the Wi-Fi access point 51, determine, according to a preset condition, whether the user equipment can access the third Wi-Fi network; and
a sending module 502, configured to send network access configuration of the third Wi-Fi network to the user equipment if the determining module determines, according to the preset condition, that the user equipment can access the third Wi-Fi network, where the network access configuration of the third Wi-Fi network is used for the user equipment to access the third Wi-Fi network.

Specifically, the determining module 501 may be configured to:
determine, according to at least one of a load condition of a connection between the user equipment and the Wi-Fi access point 51, communication quality between the user equipment and the third Wi-Fi network, and function configuration of the user equipment and the second Wi-Fi network, whether the user equipment can access the second Wi-Fi network.

Specifically, the communication quality includes at least one of the following: a received signal strength indicator RSSI, a signal-to-noise ratio SNR, a signal to interference plus noise ratio SINR, and a packet error rate PER.

Specifically, the function configuration includes at least one of the following: a frequency band supported by the user equipment and the third Wi-Fi network, and an operating mode of the user equipment and the first Wi-Fi network.

For a specific process in which the Wi-Fi access point provided in this embodiment performs a method for accessing a wireless fidelity Wi-Fi network by a user equipment, refer to related descriptions in the method embodiment shown in FIG. 3, and details are not described herein again.

In this embodiment, a Wi-Fi access point establishes a second Wi-Fi network and a third Wi-Fi network; a determining module of the Wi-Fi access point is configured to: after a user equipment accesses the second Wi-Fi network established by the Wi-Fi access point, determine, according to a preset condition, whether the user equipment can access the third Wi-Fi network; and a sending module is configured to send network access configuration of the third Wi-Fi network to the user equipment if the determining module determines that the user equipment can access the third Wi-Fi network, where the network access configuration of the third Wi-Fi network is used for the user equipment to access the third Wi-Fi network. In this way, this implements that the user equipment hands over from a network that originally connects to the Wi-Fi access point to another Wi-Fi network, so as to connect to the Wi-Fi access point.

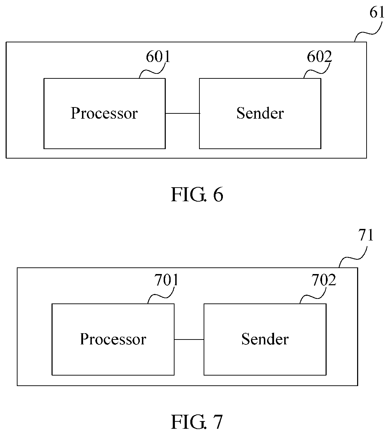

FIG. 6 is a schematic structural diagram of a Wi-Fi access point according to Embodiment 5 of the present invention. As shown in FIG. 6, a Wi-Fi access point 61 provided in this embodiment includes:
a processor 601, configured to: discover a first Wi-Fi network; and after a user equipment accesses a third Wi-Fi network established by the Wi-Fi access point 61, determine, according to at least one of communication quality between the user equipment and the first Wi-Fi network, and function configuration of the user equipment and the first Wi-Fi network, whether the user equipment can access the first Wi-Fi network; and
a sender 602, configured to send network access configuration of the first Wi-Fi network to the user equipment if the processor 601 determines that the user equipment can access the first Wi-Fi network, where the network access configuration of the first Wi-Fi network is used for the user equipment to access the first Wi-Fi network.

Specifically, the processor 601 may be configured to:
access the first Wi-Fi network by using pre-stored network access configuration of the first Wi-Fi network.

Specifically, the first Wi-Fi network is a Wi-Fi network provided by an operator or a Wi-Fi network provided by another Wi-Fi access point.

Specifically, the processor 601 may further be configured to: after the sender 602 sends the network access configuration of the first Wi-Fi network to the user equipment, query whether the user equipment has accessed the first Wi-Fi network, or receive an event that is reported by the user equipment and indicates that the user equipment has accessed the first Wi-Fi network.

The sender 602 is configured to perform at least one of the following operations: disconnecting a connection to the user equipment, where the connection is based on the second Wi-Fi network; disconnecting a connection to the first Wi-Fi network; and entering a sleep mode.

Specifically, the processor 601 may be configured to:
detect communication quality between the first Wi-Fi network and the Wi-Fi access point, and determine, according to the communication quality between the first Wi-Fi network and the Wi-Fi access point 61, whether the user equipment can access the first Wi-Fi network; or
according to communication quality between the user equipment and the Wi-Fi access point 61 and according to communication quality between the first Wi-Fi network and the Wi-Fi access point 61, determine the communication quality between the user equipment and the first Wi-Fi network , and determine whether the user equipment can access the first Wi-Fi network.

Specifically, the communication quality includes at least one of the following: a received signal strength indicator RSSI, a signal-to-noise ratio SNR, a signal to interference plus noise ratio SINR, and a packet error rate PER.

Specifically, the function configuration includes at least one of the following: a frequency band supported by the user equipment and the first Wi-Fi network, and an operating mode of the user equipment and the first Wi-Fi network.

Specifically, the network access configuration includes at least one of a service set identifier SSID, an encryption mode, or a password of the first Wi-Fi network.

For a specific process in which the Wi-Fi access point provided in this embodiment performs a method for accessing a wireless fidelity Wi-Fi network by a user equipment, refer to related descriptions in the method embodiment shown in FIG. 2, and details are not described herein again.

In this embodiment, a processor is configured to: discover a first Wi-Fi network, and after a user equipment accesses a Wi-Fi access point, determine, according to at least one of communication quality between the user equipment and the first Wi-Fi network and function configuration of the user equipment and the first Wi-Fi network, whether the user equipment can access the first Wi-Fi network; and a sender is configured to send network access configuration of the first Wi-Fi network to the user equipment if the processor determines that the user equipment can access the first Wi-Fi network, so that the user equipment directly accesses the first Wi-Fi network according to the network access configuration. In this way, this implements that when meeting a condition, the user equipment can directly access the first Wi-Fi network without using the Wi-Fi access point, thereby reducing a performance loss (such as a loss caused by signal interference) caused by a concatenation of multiple networks, reducing power consumption of the Wi-Fi access point, and saving bandwidth of the Wi-Fi access point.

FIG. 7 is a schematic structural diagram of a Wi-Fi access point according to Embodiment 6 of the present invention. As shown in FIG. 7, a Wi-Fi access point 71 provided in this embodiment establishes a second Wi-Fi network and a third Wi-Fi network, and the Wi-Fi access point 71 includes:
a processor 701, configured to: after a user equipment accesses the second Wi-Fi network established by the Wi-Fi access point 71, determine, according to a preset condition, whether the user equipment can access the third Wi-Fi network; and
a sender 702, configured to send network access configuration of the third Wi-Fi network to the user equipment if the processor 701 determines that the user equipment can access the third Wi-Fi network, where the network access configuration of the third Wi-Fi network is used for the user equipment to access the third Wi-Fi network.

Specifically, the processor 701 may be configured to:
determine, according to at least one of a load condition of a connection between the user equipment and the Wi-Fi access point 61, communication quality between the user equipment and the third Wi-Fi network, and function configuration of the user equipment and the second Wi-Fi network, whether the user equipment can access the second Wi-Fi network.

Specifically, the communication quality includes at least one of the following: a received signal strength indicator RSSI, a signal-to-noise ratio SNR, a signal to interference plus noise ratio SINR, and a packet error rate PER.

Specifically, the function configuration includes at least one of the following: a frequency band supported by the user equipment and the third Wi-Fi network, and an operating mode of the user equipment and the first Wi-Fi network.

For a specific process in which the Wi-Fi access point provided in this embodiment performs a method for accessing a wireless fidelity Wi-Fi network by a user equipment, refer to related descriptions in the method embodiment shown in FIG. 3, and details are not described herein again.

In this embodiment, a Wi-Fi access point establishes a second Wi-Fi network and a third Wi-Fi network; a processor of the Wi-Fi access point is configured to: after a user equipment accesses the second Wi-Fi network established by the Wi-Fi access point, determine, according to a preset condition, whether the user equipment can access the third Wi-Fi network; and a sender is configured to send network access configuration of the third Wi-Fi network to the user equipment if the processor determines that the user equipment can access the third Wi-Fi network, where the network access configuration of the third Wi-Fi network is used for the user equipment to access the third Wi-Fi network. In this way, this implements that the user equipment hands over from a network that originally connects to the Wi-Fi access point to another Wi-Fi network, so as to connect to the Wi-Fi access point.

Persons skilled in the art may understand that the modules or entities in the terminals provided in the embodiments may be arranged in the terminals in a distributed manner according to the description of the embodiments, or may be arranged in one or more devices that are different from those described in the embodiments. The modules or entities in the foregoing embodiments may be combined into one module or entity, or split into a plurality of submodules or entities.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the present invention as defined by the appended claims.

## Claims

1. A method for accessing a wireless fidelity ,Wi-Fi , network by a user equipment, comprising:
accessing (S101), by a Wi-Fi access point, a first Wi-Fi network by using pre-stored network access configuration of the first Wi-Fi network;
after a user equipment accesses a second Wi-Fi network established by the Wi-Fi access point, determining (S102), by the Wi-Fi access point according to at least one of communication quality between the user equipment and the first Wi-Fi network, and function configuration of the user equipment and the first Wi-Fi network, whether the user equipment can access the first Wi-Fi network; and
sending (S103), by the Wi-Fi access point, network access configuration of the first Wi-Fi network to the user equipment if the Wi-Fi access point determines that the user equipment can access the first Wi-Fi network, wherein the network access configuration of the first Wi-Fi network is used for the user equipment to access the first Wi-Fi network;
querying, by the Wi-Fi access point, whether the user equipment has accessed the first Wi-Fi network; or receiving, by the Wi-Fi access point, an event that is reported by the user equipment and indicates that the user equipment has accessed the first Wi-Fi network; and
performing, by the Wi-Fi access point, at least one of the following operations: disconnecting a connection to the first Wi-Fi network; and entering a sleep mode.

2. The method according claim 1, wherein the determining, by the Wi-Fi access node according to the communication quality between the user equipment and the first Wi-Fi network, whether the user equipment can access the first Wi-Fi network specifically comprises:
detecting communication quality between the first Wi-Fi network and the Wi-Fi access point, and determining, according to the communication quality between the first Wi-Fi network and the Wi-Fi access point, whether the user equipment can access the first Wi-Fi network; or
according to communication quality between the user equipment and the Wi-Fi access point and according to communication quality between the first Wi-Fi network and the Wi-Fi access point, determining the communication quality between the user equipment and the first Wi-Fi network, and determining whether the user equipment can access the first Wi-Fi network.

3. A Wi-Fi access point, comprising:
an access module (401), configured to access a first Wi-Fi network by using pre-stored network access configuration of the first Wi-Fi network;
a determining module (402), configured to, after a user equipment accesses a second Wi-Fi network established by the Wi-Fi access point, determine, according to at least one of communication quality between the user equipment and the first Wi-Fi network, and function configuration of the user equipment and the first Wi-Fi network, whether the user equipment can access the first Wi-Fi network; and
a sending module (403), configured to send network access configuration of the first Wi-Fi network to the user equipment if the determining module determines that the user equipment can access the first Wi-Fi network, wherein the network access configuration of the first Wi-Fi network is used for the user equipment to access the first Wi-Fi network;
wherein the determining module (402) is further configured to: after the sending module (403) sends the network access configuration of the first Wi-Fi network to the user equipment, query whether the user equipment has accessed the first Wi-Fi network; or receive an event that is reported by the user equipment and indicates that the user equipment has accessed the first Wi-Fi network; and
the sending module (403) is configured to perform at least one of the following operations: disconnecting a connection to the first Wi-Fi network; and entering a sleep mode.

4. The Wi-Fi access point according to claim 3 , wherein the first Wi-Fi network is a Wi-Fi network provided by an operator or a Wi-Fi network provided by another Wi-Fi access point.

5. The Wi-Fi access point according to any one of claims 3 to 4, wherein the determining module (402) is specifically configured to:
detect communication quality between the first Wi-Fi network and the Wi-Fi access point, and determine, according to the communication quality between the first Wi-Fi network and the Wi-Fi access point, whether the user equipment can access the first Wi-Fi network; or
according to communication quality between the user equipment and the Wi-Fi access point and according to communication quality between the first Wi-Fi network and the Wi-Fi access point, determine the communication quality between the user equipment and the first Wi-Fi network, and determine whether the user equipment can access the first Wi-Fi network.

6. The Wi-Fi access point according to any one of claims 3 to 5, wherein the function configuration comprises at least one of the following: a frequency band supported by the user equipment and the first Wi-Fi network, and an operating mode of the user equipment and the first Wi-Fi network.

## Patentansprüche

1. Verfahren zum Zugreifen auf ein "Wireless-Fidelity"-Netz, Wi-Fi-Netz, durch ein Anwendergerät, wobei das Verfahren Folgendes umfasst:
Zugreifen (S101) durch einen Wi-Fi-Zugangspunkt auf ein erstes Wi-Fi-Netz unter Verwendung einer im Voraus gespeicherten Netzzugangskonfiguration des ersten Wi-Fi-Netzes;
nachdem ein Anwendergerät auf ein zweites Wi-Fi-Netz, das durch den Wi-Fi-Zugangspunkt aufgebaut wird, zugegriffen hat, Bestimmen (S102) durch den Wi-Fi-Zugangspunkt gemäß der Kommunikationsqualität zwischen dem Anwendergerät und dem ersten Wi-Fi-Netz und/oder der Funktionskonfiguration des Anwendergeräts und des ersten Wi-Fi-Netzes, ob das Anwendergerät auf das erste Wi-Fi-Netz zugreifen kann; und
Senden (S103) durch den Wi-Fi-Zugangspunkt der Netzzugangskonfiguration des ersten Wi-Fi-Netzes an das Anwendergerät, falls der Wi-Fi-Zugangspunkt bestimmt, dass das Anwendergerät auf das erste Wi-Fi-Netz zugreifen kann, wobei die Netzzugangskonfiguration des ersten Wi-Fi-Netzes verwendet wird, damit das Anwendergerät auf das erste Wi-Fi-Netz zugreift;
Abfragen durch den Wi-Fi-Zugangspunkt, ob das Anwendergerät auf das erste Wi-Fi-Netz zugegriffen hat; oder Empfangen durch den Wi-Fi-Zugangspunkt eines Ereignisses, das durch das Anwendergerät gemeldet wird und angibt, dass das Anwendergerät auf das erste Wi-Fi-Netz zugegriffen hat; und
Ausführen durch den Wi-Fi-Zugangspunkt wenigstens einer der folgenden Operationen: Trennen einer Verbindung zu dem ersten Wi-Fi-Netz; und Eintreten in einen Schlafmodus.

2. Verfahren nach Anspruch 1, wobei das Bestimmen durch den Wi-Fi-Zugangsknoten gemäß der Kommunikationsqualität zwischen dem Anwendergerät und dem ersten Wi-Fi-Netz, ob das Anwendergerät auf das erste Wi-Fi-Netz zugreifen kann, spezifisch Folgendes umfasst:
Detektieren der Kommunikationsqualität zwischen dem ersten Wi-Fi-Netz und dem Wi-Fi-Zugangspunkt und Bestimmen gemäß der Kommunikationsqualität zwischen dem ersten Wi-Fi-Netz und dem Wi-Fi-Zugangspunkt, ob das Anwendergerät auf das erste Wi-Fi-Netz zugreifen kann; oder
gemäß der Kommunikationsqualität zwischen dem Anwendergerät und dem Wi-Fi-Zugangspunkt und gemäß der Kommunikationsqualität zwischen dem ersten Wi-Fi-Netz und dem Wi-Fi-Zugangspunkt Bestimmen der Kommunikationsqualität zwischen dem Anwendergerät und dem ersten Wi-Fi-Netz und Bestimmen, ob das Anwendergerät auf das erste Wi-Fi-Netz zugreifen kann.

3. Wi-Fi-Zugangspunkt, der Folgendes umfasst:
ein Zugriffsmodul (401), das konfiguriert ist, unter Verwendung im Voraus gespeicherter Netzzugangskonfigurationen des ersten Wi-Fi-Netzes auf ein erstes Wi-Fi-Netz zuzugreifen;
ein Bestimmungsmodul (402), das konfiguriert ist, nachdem ein Anwendergerät auf ein zweites Wi-Fi-Netz, das durch den Wi-Fi-Zugangspunkt aufgebaut wird, zugegriffen hat, gemäß der Kommunikationsqualität zwischen dem Anwendergerät und dem ersten Wi-Fi-Netz und/oder der Funktionskonfiguration des Anwendergeräts und des ersten Wi-Fi-Netzes zu bestimmen, ob das Anwendergerät auf das erste Wi-Fi-Netz zugreifen kann; und
ein Sendemodul (403), das konfiguriert ist, die Netzzugangskonfiguration des ersten Wi-Fi-Netzes an das Anwendergerät zu senden, falls das Bestimmungsmodul bestimmt, dass das Anwendergerät auf das erste Wi-Fi-Netz zugreifen kann, wobei die Netzzugangskonfiguration des ersten Wi-Fi-Netzes verwendet wird, damit das Anwendergerät auf das erste Wi-Fi-Netz zugreift;
wobei das Bestimmungsmodul (402) ferner konfiguriert ist: nachdem das Sendemodul (403) die Netzzugangskonfiguration des ersten Wi-Fi-Netzes an das Anwendergerät gesendet hat, abzufragen, ob das Anwendergerät auf das erste Wi-Fi-Netz zugegriffen hat; oder ein Ereignis zu empfangen, das durch das Anwendergerät gemeldet wird und angibt, dass das Anwendergerät auf das erste Wi-Fi-Netz zugegriffen hat; und
das Sendemodul (403) konfiguriert ist, wenigstens eine der folgenden Operationen auszuführen: Trennen einer Verbindung zu dem ersten Wi-Fi Netz; und Eintreten in einen Schlafmodus.

4. Wi-Fi-Zugangspunkt nach Anspruch 3, wobei das erste Wi-Fi-Netz ein Wi-Fi-Netz, das durch einen Betreiber bereitgestellt wird, oder ein Wi-Fi-Netz, das durch einen weiteren Wi-Fi-Zugangspunkt bereitgestellt wird, ist.

5. Wi-Fi-Zugangspunkt nach einem der Ansprüche 3 bis 4, wobei das Bestimmungsmodul (402) spezifisch konfiguriert ist:
die Kommunikationsqualität zwischen dem ersten Wi-Fi-Netz und dem Wi-Fi-Zugangspunkt zu detektieren und gemäß der Kommunikationsqualität zwischen dem ersten Wi-Fi-Netz und dem Wi-Fi-Zugangspunkt zu bestimmen, ob das Anwendergerät auf das erste Wi-Fi-Netz zugreifen kann; oder
gemäß der Kommunikationsqualität zwischen dem Anwendergerät und dem Wi-Fi-Zugangspunkt und gemäß der Kommunikationsqualität zwischen dem ersten Wi-Fi-Netz und dem Wi-Fi-Zugangspunkt die Kommunikationsqualität zwischen dem Anwendergerät und dem ersten Wi-Fi-Netz zu bestimmen und zu bestimmen, ob das Anwendergerät auf das erste Wi-Fi-Netz zugreifen kann.

6. Wi-Fi-Zugangspunkt nach einem der Ansprüche 3 bis 5, wobei die Funktionskonfiguration wenigstens eines des Folgenden umfasst: ein durch das Anwendergerät und das erste Wi-Fi-Netz unterstütztes Frequenzband und einen Betriebsmodus des Anwendergeräts und des ersten Wi-Fi-Netzes.

## Revendications

1. Procédé pour l'accès d'un équipement d'utilisateur à un réseau Wi-Fi (fidélité sans fil), comportant les étapes consistant à :
faire accéder (S101), par un point d'accès Wi-Fi, à un premier réseau Wi-Fi en utilisant une configuration pré-stockée d'accès au réseau du premier réseau Wi-Fi ;
après qu'un équipement d'utilisateur a accédé à un deuxième réseau Wi-Fi établi par le point d'accès Wi-Fi, faire déterminer (S 102), par le point d'accès Wi-Fi d'après au moins un élément parmi la qualité de communication entre l'équipement d'utilisateur et le premier réseau Wi-Fi, et la configuration de fonctions de l'équipement d'utilisateur et du premier réseau Wi-Fi, si l'équipement d'utilisateur peut accéder au premier réseau Wi-Fi ; et
faire envoyer (S103) à l'équipement d'utilisateur, par le point d'accès Wi-Fi, une configuration d'accès au réseau du premier réseau Wi-Fi si le point d'accès Wi-Fi détermine que l'équipement d'utilisateur peut accéder au premier réseau Wi-Fi, la configuration d'accès au réseau du premier réseau Wi-Fi étant utilisée pour l'accès de l'équipement d'utilisateur au premier réseau Wi-Fi ;
faire demander, par le point d'accès Wi-Fi, si l'équipement d'utilisateur a accédé au premier réseau Wi-Fi ; ou faire recevoir, par le point d'accès Wi-Fi, un événement qui est signalé par l'équipement d'utilisateur et indique que l'équipement d'utilisateur a accédé au premier réseau Wi-Fi ; et
faire effectuer, par le point d'accès Wi-Fi, au moins une des opérations suivantes : déconnecter une connexion au premier réseau Wi-Fi ; et passer dans un mode de sommeil.

2. Procédé selon la revendication 1, la détermination, par le noeud d'accès Wi-Fi d'après la qualité de communication entre l'équipement d'utilisateur et le premier réseau Wi-Fi, selon laquelle l'équipement d'utilisateur peut accéder ou non au premier réseau Wi-Fi comportant spécifiquement les étapes consistant à :
détecter la qualité de communication entre le premier réseau Wi-Fi et le point d'accès Wi-Fi, et déterminer, d'après la qualité de communication entre le premier réseau Wi-Fi et le point d'accès Wi-Fi, si l'équipement d'utilisateur peut accéder au premier réseau Wi-Fi ; ou
d'après la qualité de communication entre l'équipement d'utilisateur et le point d'accès Wi-Fi et d'après la qualité de communication entre le premier réseau Wi-Fi et le point d'accès Wi-Fi, déterminer la qualité de communication entre l'équipement d'utilisateur et le premier réseau Wi-Fi, et déterminer si l'équipement d'utilisateur peut accéder au premier réseau Wi-Fi.

3. Point d'accès Wi-Fi, comportant :
un module (401) d'accès, configuré pour accéder à un premier réseau Wi-Fi en utilisant une configuration pré-stockée d'accès au réseau du premier réseau Wi-Fi ;
un module (402) de détermination, configuré, après qu'un équipement d'utilisateur a accédé à un deuxième réseau Wi-Fi établi par le point d'accès Wi-Fi, pour déterminer, d'après au moins un élément parmi la qualité de communication entre l'équipement d'utilisateur et le premier réseau Wi-Fi, et la configuration de fonctions de l'équipement d'utilisateur et du premier réseau Wi-Fi, si l'équipement d'utilisateur peut accéder au premier réseau Wi-Fi ; et
un module (403) d'émission, configuré pour envoyer à l'équipement d'utilisateur une configuration d'accès au réseau du premier réseau Wi-Fi si le module de détermination détermine que l'équipement d'utilisateur peut accéder au premier réseau Wi-Fi, la configuration d'accès au réseau du premier réseau Wi-Fi étant utilisée pour l'accès de l'équipement d'utilisateur au premier réseau Wi-Fi ;
le module (402) de détermination étant en outre configuré pour : après que le module (403) d'émission a envoyé à l'équipement d'utilisateur la configuration d'accès au réseau du premier réseau Wi-Fi, demander si l'équipement d'utilisateur a accédé au premier réseau Wi-Fi ; ou recevoir un événement qui est signalé par l'équipement d'utilisateur et indique que l'équipement d'utilisateur a accédé au premier réseau Wi-Fi ; et
le module (403) d'émission étant configuré pour effectuer au moins une des opérations suivantes : déconnecter une connexion au premier réseau Wi-Fi ; et passer dans un mode de sommeil.

4. Point d'accès Wi-Fi selon la revendication 3, le premier réseau Wi-Fi étant un réseau Wi-Fi mis en place par un opérateur ou un réseau Wi-Fi mis en place par un autre point d'accès Wi-Fi.

5. Point d'accès Wi-Fi selon l'une quelconque des revendications 3 à 4, le module (402) de détermination étant spécifiquement configuré pour :
détecter la qualité de communication entre le premier réseau Wi-Fi et le point d'accès Wi-Fi, et déterminer, d'après la qualité de communication entre le premier réseau Wi-Fi et le point d'accès Wi-Fi, si l'équipement d'utilisateur peut accéder au premier réseau Wi-Fi ; ou
d'après la qualité de communication entre l'équipement d'utilisateur et le point d'accès Wi-Fi et d'après la qualité de communication entre le premier réseau Wi-Fi et le point d'accès Wi-Fi, déterminer la qualité de communication entre l'équipement d'utilisateur et le premier réseau Wi-Fi, et déterminer si l'équipement d'utilisateur peut accéder au premier réseau Wi-Fi.

6. Point d'accès Wi-Fi selon l'une quelconque des revendications 3 à 5, la configuration de fonctions comportant au moins un des éléments suivants : une bande de fréquences prise en charge par l'équipement d'utilisateur et le premier réseau Wi-Fi, et un mode de fonctionnement de l'équipement d'utilisateur et du premier réseau Wi-Fi.
